# EUROPEAN PATENT SPECIFICATION

(11) **EP 4 239 772 B1**
(45) Date of publication and mention of the grant of the patent: **18.03.2026**
(21) Application number: 21948027.4
(22) Date of filing: 12.11.2021
(51) Int. Cl.: H01M 50/244, H01M 50/204, H01M 50/242, H01M 50/289

(54) **BATTERY BOX ASSEMBLY, BATTERY, ELECTRICAL DEVICE, AND METHOD FOR MANUFACTURING A BATTERY BOX ASSEMBLY**
BATTERIEGEHÄUSE, BATTERIE, ELEKTRISCHE VORRICHTUNG UND VERFAHREN ZUR HERSTELLUNG DER BATTERIEGEHÄUSE
ENSEMBLE DE BOÎTIER DE BATTERIE, BATTERIE, DISPOSITIF ÉLECTRIQUE, ET PROCÉDÉ DE FABRICATION D'ENSEMBLE BOÎTIER DE BATTERIE

(30) Priority: 01.07.2021 CN 202110742242
(43) Date of publication of application: 06.09.2023
(73) Proprietor: Jiangsu Contemporary Amperex Technology Limited, Liyang, Jiangsu 213300 (CN)
(72) Inventor: LIAO, Xiping, hangzhou, Jiangsu 213300 (CN); HUANG, Yangzhi, hangzhou, Jiangsu 213300 (CN); CHEN, Qifeng, hangzhou, Jiangsu 213300 (CN)
(74) Representative: Rowlands, Stuart Michael
(86) International application number: PCT/CN2021/130437
(87) International publication number: WO 2023/273101

(56) References cited:
- CN-A- 113 258 197
- CN-U- 210 156 459
- CN-U- 211 376 714
- CN-U- 211 376 714
- CN-U- 211 629 183
- CN-U- 211 629 183
- CN-U- 212 625 843
- CN-U- 212 625 843
- US-A1- 2019 379 013
- US-A1- 2019 379 013

## Description

### TECHNICAL FIELD

This application relates to the field of battery technologies, and specifically, to a battery box assembly, a battery, an electric device, and a manufacturing method of a battery box assembly.

### BACKGROUND

Batteries are widely used in the new energy field, such as electric vehicles and new energy vehicles. A battery generally includes a plurality of battery cells and a box assembly.

In the field of battery technologies, a structure of a box assembly has some impact on safety and service life of a battery. How the safety performance and service life of the battery is improved is an urgent problem to be solved in this field. CN 210 156 459 U discloses a battery module comprises a shell and a plurality of battery cells arranged in the shell, the shell is defined by a top plate, a bottom plate, two end plates and two side plates. CN 212 625 843 U discloses a battery module frame, a battery module and a vehicle, the battery module frame comprises two end plates which are oppositely arranged and a partition plate for connecting thetwo end plates, and each end plate comprises a plate body. CN 211 376 714 U discloses battery module includes a plurality of battery sequences, an end plate, and a separator.

### SUMMARY

This application is intended to provide a battery box assembly, a battery, an electric device, and a manufacturing method of a battery box assembly, so as to improve safety and service life of batteries.

These improvements are obtained with a battery box assembly according to claim 1 and with a manufacturing method according to claim 14.

Embodiments of this application are implemented as follows.

According to a first aspect, an embodiment of this application provides a box assembly, including: an end plate, where the end plate is provided with at least two channels; and a partition, where the partition is configured to be connected to the end plate and separate an internal space of the box assembly, and the partition includes a body and at least two inserting portions located on an end of the body, each of the inserting portions having one end connected to an end portion of the body, and each of the inserting portions including a connecting region and a bending region, with the connecting region connected to the body through the bending region; where each channel of the at least two channels fits with the at least one of the inserting portions by inserting, so that the connecting region of each of the inserting portions abuts against an inner wall of a fitting channel, allowing the partition to be connected to the end plate.

The partition is connected to the end plate to separate the internal space of the box assembly. Battery cells are filled and arranged on two sides of the partition. When the partition is not accurately positioned, the partition and a joint between the partition and the end plate are prone to be damaged due to uneven pressure on two sides in a thickness direction of the partition, which affects service life of the box assembly, further affecting service life of a battery. In addition, battery cells on one side are extruded, affecting safety performance of the battery, further affecting the service life of the battery. According to this application, in the box assembly for accommodating a battery cell, the end plate is provided with at least two channels, and the partition is provided with at least two inserting portions. In a case that each of the inserting portions abuts against an inner wall of a corresponding channel, the inserting portion is positioned using the inner wall of the channel, and the plurality of inserting portions restrain each other, so that the partition is stably positioned in its current position, ensuring accurate positioning of the partition. Because each of the inserting portions is provided with a bending region and a connecting region, where the connecting region is configured to insert into a corresponding channel wall, provision of the bending region makes a surface of the connecting region be attached flat against an inner wall of the channel, ensuring sufficient contact area and interaction between the connecting region and the channel. In this way, more stable assembly is implemented to alleviate a problem that the safety and service life of the battery are affected due to inaccurate positioning of the partition. In addition, as a larger surface of the battery cell faces toward the end plate, swelling of an internal battery cell is mainly manifested as bulging of the larger face, so that the end plate is extruded, which is prone to cause pull cracks of the joint between the end plate and the partition. In technical solutions of this application, the bending region is provided in the inserting portion, so that when the end plate is extruded, the bending region stretches and deforms to disperse stress, so as to alleviate deformation and damage due to stress on the joint, thereby further improving the safety and service life of the battery.

In an embodiment of this application, the at least two channels include a first channel and a second channel, where an inner wall of the first channel includes a first surface, the first surface faces toward a first direction, an inner wall of the second channel includes a second surface, the second surface facing toward a second direction, and the first direction is opposite to the second direction; and the at least two inserting portions include a first inserting portion and a second inserting portion, where the first inserting portion is configured to fit with the first channel by inserting, and the first inserting portion abuts against the first surface; and the second inserting portion is configured to fit with the second channel, and the second inserting portion abuts against the second surface.

The first inserting portion and the second inserting portion respectively abut against two surfaces facing opposite directions, so that the first inserting portion and the second inserting portion restrain each other, and the first inserting portion and the second inserting portion clamp the end plate or are clamped by a first surface and a second surface on the end plate, so as to implement positioning of the partition.

In an embodiment of this application, the first direction and the second direction are parallel to a width direction of the end plate.

In the foregoing technical solutions, the first inserting portion and the second inserting portion are clamped along the width direction of the end plate, and both the first surface and the second surface are parallel to the partition. This helps improve positioning accuracy of the partition in the width direction of the end plate, and further ensuring that the partition accurately separates the internal space of the box assembly.

In an embodiment of this application, the first channel and the second channel are arranged along a height direction of the end plate.

The first channel and the second channel being arranged in the height direction of the end plate allows the partition to have an abutting position at an upper section and a lower section respectively, which prevents the partition from titling toward a side in its thickness direction, ensuring stable connection and accurate positioning of the partition.

In an embodiment of this application, projections of the first surface and the second surface on a bottom surface of the end plate in the height direction of the end plate overlap.

The first surface and the second surface are coplanar. A positioning location of the partition can be determined through provision of the first surface and the second surface in a specific position in the width direction of the end plate, which makes it easy to verify whether the end plate is manufactured up to standard, thereby avoiding a problem of inaccurate positioning of the partition due to manufacturing deviation of the end plate.

In an embodiment of this application, the first surface and the second surface are located on a width central plane of the end plate.

Two parts of the end plate have same structural strength when the end plate is evenly separated from the middle.

In an embodiment of this application, the inner wall of the first channel further includes a third surface opposite the first surface, and a first clearance is present between the first inserting portion and the third surface; and the inner wall of the second channel further includes a fourth surface opposite the second surface, and a second clearance is present between the second inserting portion and the fourth surface.

Clearance fit between the channel and its corresponding inserting portion facilitates entering of the inserting portion into the channel, avoiding a problem that the inserting portion cannot insert into the channel due to a manufacturing tolerance.

In an embodiment of this application, the first channel is provided with a first guide slope on an end close to the partition, and the first guide slope is configured to guide the first inserting portion to insert into the first channel; and the second channel is provided with a second guide slope on an end close to the partition, and the second guide slope is configured to guide the second inserting portion to insert into the second channel.

With disposition of the guide slope, the inserting portion enters its corresponding channel through guidance of the guide slope, preventing an end portion of the inserting portion colliding with a location near the channel, and facilitating entering of the inserting portion into the channel.

In an embodiment of this application, the first inserting portion and the second inserting portion are spaced apart along a height direction of the partition.

Due to small thickness of the partition, the two inserting portions are arranged along the height direction of the partition so that the two inserting portions can be manufactured into larger ones, which makes them easy to manufacture and have higher structural strength. In addition, when the partition is in use, two restraining forces are imposed in the height direction of the partition, preventing an upper end or a lower end of the partition from tilting toward the thickness direction of the partition.

In an embodiment of this application, each of the inserting portions and the inner wall of the fitting channel are connected at an abutting position to form a connecting seam; and the inserting portion and the partition are welded to each other at the connecting seam.

The inserting portion and the inner wall of the channel abut against each other, with a small clearance formed at the abutting position, which is conducive to fastening by bonding, welding, or the like. The partition is further positioned by welding at the abutting position.

In an embodiment of this application, the bending region is configured to shield the connecting seam in a thickness direction of the end plate.

As the bending region shields the connecting seam, when the connecting seam is formed at the abutting position by welding, the bending region functions as a light block. This prevents the welding laser from getting inside the box and irradiating the battery cell, avoiding damage of a housing of the battery cell, and preventing a cell blue membrane inside the battery cell from being burnt due to overheating of the housing of the battery cell.

In an embodiment of this application, the connecting region shifts relative to the body toward a side in the thickness direction of the partition, and the bending region is a step disposed between the connecting region and the body.

As the connecting region shifts relative to the body, the inserting portion inserting into the channel can flexibly abut against an inner wall of the channel. As the connecting region shifts relative to the body, and the bending region is configured as a step, flexibility of the inserting portion in a width direction increases, and force applied onto the inner wall of the channel against which the inserting portion abuts increases. Therefore, a restraining force formed by two or more inserting portions increases, allowing more stable clamping and improved positioning effect. In addition, the step formed by the bending region can also be stretched to release swelling force.

In an embodiment of this application, each of the connecting regions and each of the bending regions are equal in thickness to the body.

Thicknesses of the body, the connecting regions connected to the body, and the bending region are set to be equal to prevent a thin part from being damaged first, ensuring integrity of the partition and avoiding influence on the service life of the battery due to damage of the partition.

In an embodiment of this application, each of the inserting portions and the body are integrally formed.

Two inserting portions can be integrally formed by stamping, featuring easy and convenient manufacturing.

According to claim 1, two projections of the at least two channels on the bottom surface of the end plate in the height direction of the end plate partially overlap or are spaced apart, or the two projections are arranged as connected in edge.

In a case that the at least two channels are aligned up and down, the inserting portion needs to be stamped and thinned, so that the two inserting portions can insert into the channel smoothly and abut against the inner wall of the fitting channel, resulting in many processing and forming steps of the inserting portion. In a case that the projections of the channels partially overlap, are spaced apart, or are connected in edge, the two channels are staggered in a height direction. In this case, the inserting portion is stamped to shift slightly relative to the partition, so that the inserting portion can be easily insert into the channel and abut against the inner wall of the channel, facilitating processing of the inserting portion and entering of the inserting portion into the channel.

According to claim 1, a connecting groove is further formed on the end plate, and the at least two channels communicate with each other through the connecting groove.

The connecting groove allows a weak region to be formed in the first channel and the second channel, so as to disperse stress and prevent damage at a joint.

According to a second aspect, an embodiment of this application provides a battery, including the foregoing box assembly.

For the battery provided in this application, the foregoing box assembly is used to accommodate a battery cell, where positioning of a partition in the box assembly is accurate and stable, and an internal space of the box assembly is separated with high accuracy, so that service life of the battery is not likely to be reduced due to extrusion on the battery cell.

According to a third aspect, an embodiment of this application provides an electric device, including the foregoing battery.

The electric device provided in this application employs the foregoing battery, and therefore has stable power supply and good durability.

According to a fourth aspect, an embodiment of this application provides a manufacturing method of a battery box assembly, including: providing an end plate, where the end plate is provided with at least two channels; providing a partition, where the partition is configured to be connected to the end plate and separate an internal space of the box assembly; the partition includes a body and at least two inserting portions located on an end of the body, each of the inserting portions including a connecting region and a bending region, with the connecting region connected to the body through the bending region; and each channel of the at least two channels fits with the at least one inserting portion by inserting, so that the connecting region of each of the inserting portions abuts against an inner wall of a fitting channel, allowing the partition to be connected to the end plate; and inserting the inserting portion into the channel.

According to a fifth aspect, an embodiment of this application provides a manufacturing apparatus of box assembly, including: a first providing apparatus, configured to provide an end plate, where the end plate is provided with at least two channels; a second providing apparatus, configured to provide a partition, where the partition is configured to be connected to the end plate and separate an internal space of the box assembly; the partition includes a body and at least two inserting portions located on one end of the body, each of the inserting portions including a connecting region and a bending region, with the connecting region connected to the body through the bending region; and each channel of the at least two channels fits with the at least one inserting portion by inserting, so that the connecting region of each of the inserting portions abuts against an inner wall of a fitting channel, allowing the partition to be connected to the end plate; and an assembly apparatus, configured to insert the inserting portion into the channel.

### BRIEF DESCRIPTION OF DRAWINGS

In order to describe the technical solutions in the embodiments of this application more clearly, the following briefly describes the accompanying drawings required for describing the embodiments. It is appreciated that the accompanying drawings below only show some embodiments of this application and thus should not be considered as limitations on the scope. A person of ordinary skill in the art may still derive other related drawings from the accompanying drawings without creative efforts.
FIG. 1 is a schematic diagram of a vehicle according to an embodiment of this application;
FIG. 2 is a stereoscopic schematic diagram of a battery;
FIG. 3 is a schematic diagram of a disassembled state of a battery;
FIG. 4 is a stereoscopic schematic diagram of a box assembly;
FIG. 5 is a stereoscopic schematic diagram of a disassembled state of a partition and an end plate;
FIG. 6 shows an embodiment in which projections of a first channel and a second channel fully overlap;
FIG. 7 shows an embodiment in which projections of a first channel and a second channel partially overlap;
FIG. 8 shows an embodiment in which projections of a first channel and a second channel are spaced apart;
FIG. 9 shows another embodiment in which projections of a first channel and a second channel are spaced apart;
FIG. 10 shows still another embodiment in which projections of a first channel and a second channel are spaced apart;
FIG. 11 shows yet another embodiment in which projections of a first channel and a second channel are spaced apart;
FIG. 12 shows an embodiment in which projections of a first channel and a second channel are connected in edge;
FIG. 13 shows another embodiment in which projections of a first channel and a second channel are connected in edge;
FIG. 14 shows still another embodiment in which projections of a first channel and a second channel are connected in edge;
FIG. 15 is a stereoscopic schematic diagram of a partition;
FIG. 16 is a schematic diagram of an elevation structure of a partition;
FIG. 17 is a schematic diagram of a connection structure of a first inserting portion and a first channel;
FIG. 18 is a schematic diagram of a connection structure of a second inserting portion and a second channel;
FIG. 19 is a schematic diagram of a partition in tension when an end plate is extruded;
FIG. 20 is a schematic structural diagram of a connecting groove of an end plate;
FIG. 21 is a schematic structural diagram of another connecting groove of an end plate;
FIG. 22 is a schematic structural diagram of still another connecting groove of an end plate;
FIG. 23 is a schematic structural diagram of yet another connecting groove of an end plate;
FIG. 24 is a schematic structural diagram of still yet another connecting groove of an end plate;
FIG. 25 is a schematic flowchart of a manufacturing method of box assembly; and
FIG. 26 is a schematic block diagram of a manufacturing apparatus of box assembly.

The accompanying drawings are not drawn to scale.

Reference signs: 1000. vehicle; 100. battery; 200. motor; 300. controller; 2. battery cell; 1. box assembly; 11. end plate; 111. first channel; 1111. first surface; 1112. third surface; 1113. first clearance; 1114. first guide slope; 112. second channel; 1121. second surface; 1122. fourth surface; 1123. second clearance; 1124. second guide slope; 113. connecting groove; 1131. weak region; 12. partition; 120. body; 121. first inserting portion; 1211. first inserting portion bending region; 1212. first inserting portion connecting region; 122. second inserting portion; 1221. second inserting portion bending region; 1222. second inserting portion connecting region; 13. side plate; 14. base plate; 3. manufacturing apparatus; 31. first providing apparatus; 32. second providing apparatus; 33. assembly apparatus; S. connecting seam; and L. laser.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. Generally, the components of the embodiments of this application as described and illustrated in the accompanying drawings herein can be arranged and designed in a variety of configurations.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. A person skilled in the art can clearly and implicitly understand that the embodiments described in this application can be combined with other embodiments.

In the description of this application, unless otherwise specified or defined explicitly, the terms "first", "second", and the like are merely intended for distinguishing purposes and shall not be understood as any indication or implication of relative importance. The terms "at least two" and "a plurality of" both refer to two or more. Unless otherwise specified or described, the term "connect" should be understood in its general sense. For example, the "connect" may refer to a fixed connection, a detachable connection, or an integral connection; and the "connect" may refer to a direct connection or an indirect connection via an intermediate medium. Persons skilled in the art can understand specific meanings of these terms in this application as appropriate to specific situations.

**In** this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes multiple battery cells for providing higher voltage and capacity. For example, the battery mentioned in this application may include a battery module, a battery pack, or the like.

**In** the art, safety and service life of batteries are very important. When being extruded, a battery is prone to safety problems such as explosion and fire, affecting service life of the battery. In order to prevent extrusion and the like on a battery, a plurality of battery cells are generally packaged into a box assembly to avoid extrusion on the plurality of battery cells. However, there are still safety problems caused by extrusion on a battery cell. Through further research, it has been found that the safety problems are caused by extrusion on part of battery cells in a battery.

Generally, an internal space of a box assembly is separated by a partition, where the partition has two ends both connected to an end plate, and a plurality of battery cells are arranged on both sides in a thickness direction of the partition. In a case that the partition is inaccurately positioned, battery cells located on one side of the partition may be extruded, and therefore the battery cells are prone to safety problems such as explosion and fire. A box structure also affects safety and service life of a battery to some extent. In addition, the battery cell also exerts an extrusion force on the box assembly, causing damage to a connection part of the box assembly. Damage or disintegration of the box assembly also affects the safety and service life of the battery, resulting in that the battery cannot be used.

To ensure accurate positioning of the partition, a manner adopted in the prior art is as follows: A channel is provided on the partition, an inserting portion is provided on an end of the partition, and the inserting portion inserts into the channel and welded to the channel, so as to implement connection and positioning of the partition. In the prior manner, in order to alleviate a problem of unsmooth insertion of the inserting portion into the channel caused by a manufacturing tolerance, the inserting portion generally needs to be thinned to have a size smaller than the channel, to ensure that the inserting portion can insert into the channel smoothly. However, the prior manner brings other problems. For example, to ensure accurate positioning of the partition, the inserting portion needs to be welded to an inner wall of the channel. As the inserting portion has a smaller size than the channel, the inserting portion is movable in the channel, and the inserting portion is hard to be positioned, which leads to deviation of a welding position, and finally leads to inaccurate positioning of the partition, affecting service life of the battery.

In view of this, to increase safety and service life of a battery, this application provides a technical solution so as to improve positioning accuracy of a partition. At least two inserting portions are provided at an end of a partition of a box assembly, an end plate that is configured to be connected to the partition is provided with at least two channels, and each channel fits with at least one inserting portion, so that each inserting portion abuts against an inner wall of a fitting channel, so as to connect the partition to the end plate. In other words, the at least two inserting portions on the partition both abut against the inner wall of the fitting channel, allowing the at least two inserting portions to restrain each other. The at least two inserting portions fit to clamp the end plate, or a clamping force is applied by the at least two channels of the end plate, so that each inserting portion clings to the inner wall of the channel in which the inserting portion is located, and positioning of each inserting portion is implemented, thereby ensuring accurate positioning of the partition.

The technical solutions described in the embodiments of this application are applicable to electric devices using a battery, and the electric device may be a ship, a vehicle, a drone, or the like. The vehicle is a new energy vehicle, which may be a battery electric vehicle, or may be a hybrid electric vehicle or a range-extended vehicle. A vehicle body is provided with a drive motor. The drive motor is electrically connected to the battery as a power source, and is provided with electrical energy by the battery. The drive motor is connected to wheels on the vehicle body through a transmission mechanism to drive the vehicle. In addition, the battery may also be used in an energy storage cabinet to provide electric power as a power source.

It should be understood that the technical solutions described in the embodiments of this application are not only applicable to the devices described above, but also applicable to all devices using batteries. However, for brevity of description, in the following embodiments, the electric vehicle is used as an example for description.

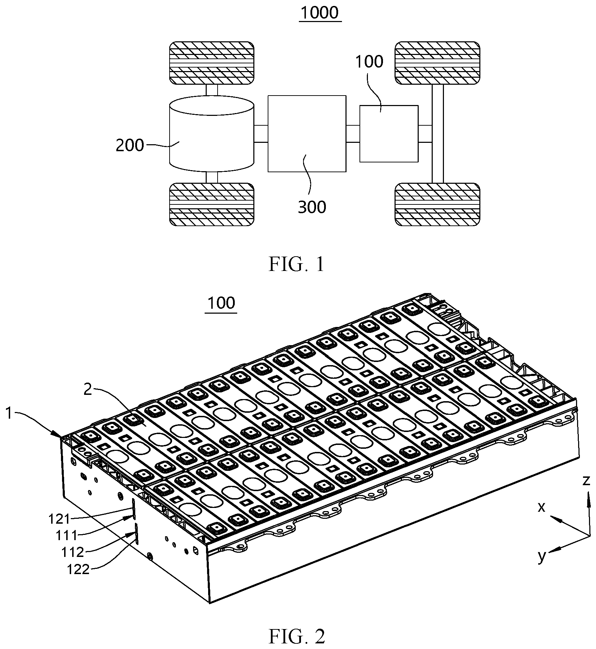

For example, FIG. 1 is a schematic structural diagram of an electric device according to an embodiment of this application. The electric device is a vehicle 1000, and the vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside. For example, the battery 100 may be disposed at the bottom, front, or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of this application, the battery 100 can be used not only as the operational power source for the vehicle 1000, but also as a driving power source for the vehicle 1000, replacing or partially replacing fossil fuel or natural gas to provide driving traction for the vehicle 1000.

The vehicle 1000 may further be provided with a controller 300 and a motor 200 inside, where the controller 300 is configured to control the battery 100 to supply power to the motor 200, for example, to satisfy power needs of start, navigation, and driving of the vehicle 1000.

To meet different power usage requirements, the battery 100 may include a plurality of battery cells 2, where the plurality of battery cells 2 may be connected in series, parallel, or series-parallel, and being connected in series-parallel refers to a combination of series-parallel connections. In some embodiments, the plurality of battery cells 2 may be connected in series, parallel, or series-parallel to form a battery module first, and then a plurality of battery modules are connected in series, parallel, or series-parallel to form the battery 100. In other words, the plurality of battery cells 2 may be directly combined into the battery 100, or may first be combined into battery modules which are then combined into the battery 100.

As shown in FIG. 2, the battery 100 may include a plurality of battery cells 2 and a box assembly 1. The box assembly 1 forms a space for accommodating the plurality of battery cells 2, so that the plurality of battery cells 2 are arranged in the space of the box assembly 1. The box assembly 1 is not limited to any specific type, and may be a frame-shaped box, a disk-shaped box, a box-shaped box, or the like.

Specifically, the box assembly 1 may include an upper box body and a lower box body, where the upper box body and the lower box body are snap-fitted together. The upper box body and the lower box body may each have an opening. For example, the upper box body and the lower box body each may be a hollow cuboid and have only one surface with an opening, the opening of the upper box body is disposed opposite the opening of the lower box body, and the upper box body and the lower box body are snap-fitted to form the box assembly 1 with an accommodating space. Alternatively, one of the upper box body and the lower box body may be a cuboid with an opening, and the other of the upper box body and the lower box body may be a cover plate structure to close the opening of the cuboid. The plurality of battery cells 2 are connected in parallel, series, or parallel-series, and then placed into the box assembly 1 formed after the upper box body and the lower boxy body are snap-fitted.

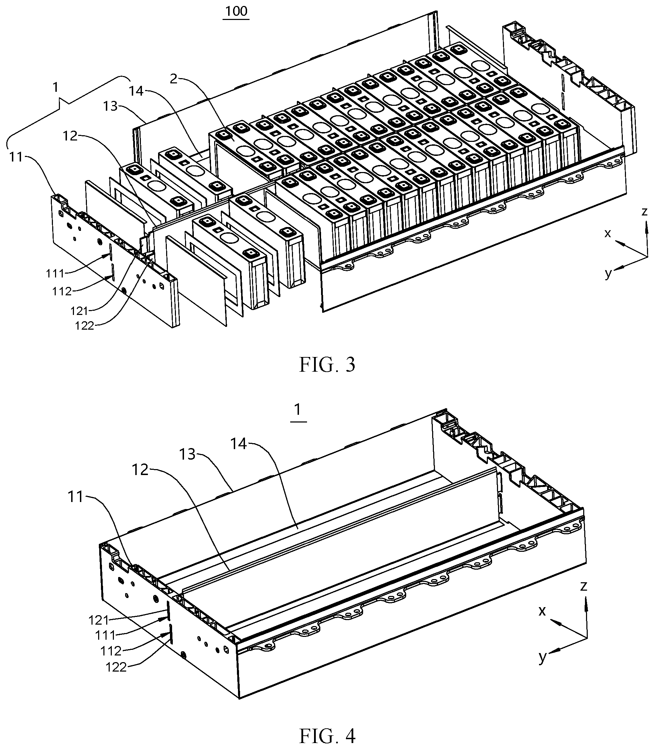

In this embodiment, the upper box body of the box assembly 1 being a cover plate structure (not shown in the figure) and the lower box body being a cuboid with an opening are used as an example. The accommodating space of the box assembly 1 is located in the lower box body, and the upper box body covers the lower box body to close the accommodating space. As shown in FIG. 2, FIG.3, and FIG. 4, to form the lower box body, the box assembly 1 includes an end plate 11 and a partition 12.

For ease of description, a direction x, a direction y, and a direction z are defined according to a placement manner of the battery 100 in normal use, where the three directions are perpendicular to each other. A width direction of the end plate 11 is parallel to the direction x, a thickness direction of the end plate 11 is parallel to the direction y, and a height direction of the end plate 11 is parallel to the direction z; and a thickness direction of the partition 12 is parallel to the direction x, a width direction of the partition 12 is parallel to the direction y, and a height direction of the partition 12 is parallel to the direction z. In this embodiment, the width direction of the end plate 11 refers to a direction along a longer side of the end plate 11, and the width direction of the partition 12 refers to a direction along a longer side of the partition 12.

Two ends of the partition 12 in the width direction are both connected to one end plate 11, to separate the internal accommodating space of the box assembly 1. A plurality of battery cells 2 are respectively arranged in sequence on two sides of the partition 12 in the thickness direction. In other words, a plurality of battery cells 2 are arranged on one side of the partition 12 in the width direction of the partition 12, and a plurality of battery cells 2 are also arranged on the other side of the partition 12 in the width direction of the partition 12.

The box assembly 1 may further include a side plate 13. The side plate 13 connects end portions of two end plates 11 in the width direction, where ends of the two end plates 11 are connected by a side plate 13 and other ends of the two end plates 11 are connected by another side plate 13.

The box assembly 1 further includes a base plate 14. The base plate 14 is perpendicular to the end plate 11, the partition 12, and the side plate 13, that is, in a direction perpendicular to the direction z, the end plate 11, the partition 12, and the side plate 13 are all connected to the base plate 14, so that the accommodating space with one end open and the other end closed is formed in the box assembly 1. The battery 100 is placed into the accommodating space through the opening. In some embodiments, the base plate 14 does not close the other end of the accommodating space. The base plate 14 is provided in a quantity of two, and each of the two base plates 14 is connected to one side plate 13 and extends from the side plate 13 in a direction approaching the partition plate 12, so that the other end of the accommodating space is locally shielded. In other words, the base plate 14 is a strip edge formed on the side plate 13, and the base plate 14 shields the battery cell 2, preventing the battery cell 2 from falling off the other end after entering the accommodating space through the opening. In some other embodiments, the base plate 14 may be eliminated, and two opposite surfaces of the battery cell 2 are clamped through coordination between the partition 12 and the side plate 13.

During actual manufacturing, the end plate 11, the side plate 13, and the base plate 14 may be integrally formed, or separately manufactured before connected as a whole. The end plate 11 is provided with at least two channels, and the partition 12 is provided with at least two inserting portions, where each channel fits with at least one inserting portion. In this way, each inserting portion abuts against an inner wall of a fitting channel, to implement positioning of each inserting portion, which makes the at least two inserting portions restrain each other, so as to connect the partition 12 to the end plate 11, ensuring accurate positioning of the partition 12.

In other words, the channels are provided in a quantity of two or more, and the inserting portions are provided in a quantity of two or more. In some embodiments, two channels are provided, and two inserting portions are provided, where the two inserting portions are respectively inserted into the two channels, and the two inserting portions respectively abut against the inner walls of the channels in which the two inserting portions are located. One inserting portion cannot move in one direction by abutting against the inner wall of the channel in which it is located, and the other inserting portion cannot move in another direction by abutting against the inner wall of the channel in which it is located, so that the two inserting portions restrain each other, and the partition cannot move, implementing positioning of the partition. In some embodiments, two channels are provided, more than two inserting portions are provided, where each channel is inserted with at least one inserting portion. In some embodiments, two inserting portions are provided, more than two channels are provided, where each channel is inserted with at least one inserting portion.

In some embodiments, an opening shape of each of channel may be a rectangle, a triangle, a pentagon, or another shape. The opening shape being a rectangle is used as an example for description in this application.

For ease of description, in this embodiment, the end plate 11 being provided with two channels and the partition 12 being provided with two inserting portions are used as an example for description.

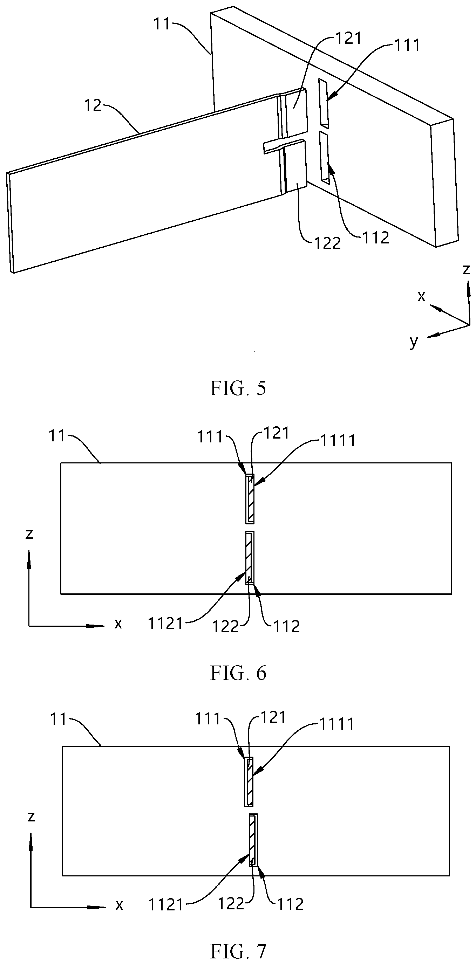

As shown in FIG. 5, the at least two channels include a first channel 111 and a second channel 112, and the at least two inserting portions include a first inserting portion 121 and a second inserting portion 122.

The first inserting portion 121 is configured to fit with the first channel 111, and the second inserting portion 122 is configured to fit with the second channel 112. An inner wall of the first channel 111 includes a first surface 1111, and the first inserting portion 121 abuts against the first surface 1111. An inner wall of the second channel 112 includes a second surface 1121, and the second inserting portion 122 abuts against the second surface 1121.

The first surface 1111 faces toward a first direction, and the second surface 1121 faces toward a second direction, where the first direction is opposite to the second direction. The first direction and the second direction may be the width direction of the end plate 11 (namely, direction x) or the height direction of the end plate 11 (namely, direction z).

A surface of the first inserting portion 121 facing toward the second direction abuts against the first surface 1111, and the first inserting portion 121 fits with the first surface 1111 to restrict moving of the partition 12 toward the second direction. A surface of the second inserting portion 122 facing toward the first direction abuts against the second surface 1121, and the second inserting portion 122 fits with the second surface 1121 to restrict moving of the partition 12 toward the first direction. In this way, the two inserting portions restrain each other, implementing positioning of the partition 12.

The first channel 111 and the second channel 112 are arranged in multiple of manners, and two projections of the first channel 111 and the second channel 112 on a bottom surface of the end plate 11 in the height direction of the end plate 11 (namely, direction z) have a variety of cases, for example, fully overlapping, partially overlapping, being spaced apart, or arranged as connected in edge. It should be noted that, in a case that more than two channels are provided, two projections of the at least two channels, in the height direction of the end plate 11, on the bottom surface of the end plate 11 may fully overlap, partially overlap, or be spaced apart, or be arranged as connected in edge.

In any arrangement manner of the first channel 111 and the second channel 112, the first direction toward which the first surface 1111 faces and the second direction toward which the second surface 1121 faces may be parallel to the direction z, so that the first surface 1111 and the second surface 1121 respectively face toward an upper side and a lower side of the end plate 11 in the height direction (the direction z). In this case, positions of the first inserting portion 121 and the second inserting portion 122 are adjusted in the direction x, so that the partition 12 is accurately positioned in the direction x. Or the first direction toward which the first surface 1111 faces and the second direction toward which the second surface 1121 faces may alternatively be parallel to the direction x, so that the first surface 1111 and the second surface 1121 respectively face toward two sides in the direction x. In this case, the first inserting portion 121 and the second inserting portion 122 cannot move in the direction x, thus a position of the partition 12 in the direction x is uniquely determined, thereby better implementing accurate positioning.

For ease of description, the "two projections of the first channel 111 and the second channel 112 on a bottom surface of the end plate 11 in the height direction of the end plate 11 (namely, direction z)" is referred to as "projections of the first channel 111 and the second channel 112" for short.

For ease of description, as shown in the figure, one end in the width direction of the end plate 11 is referred to as "right", the other end in the width direction of the end plate 11 is referred to as "left", one end in the height direction of the end plate 11 is referred to as "upper", and the other end in the height direction of the end plate 11 is referred to as "lower".

FIG. 6 shows an embodiment in which projections of the first channel 111 and the second channel 112 fully overlap, where the first channel 111 and the second channel 112 are arranged along the direction z. Correspondingly, the first inserting portion 121 and the second inserting portion 122 are spaced apart along the direction z. As shown in FIG. 6, the first surface 1111 and the second surface 1121 respectively face toward the left side and the right side in the direction x of the end plate 11, and the first inserting portion 121 and the second inserting portion 122 respectively abut against the first surface 1111 and the second surface 1121.

In a case that the projections of the first channel 111 and the second channel 112 fully overlap, to ensure smooth insertion of the first inserting portion 121 and the second inserting portion 122 into the first channel 111 and the second channel 112, in actual machining, the first inserting portion 121 and the second inserting portion 122 need to be stamped and thinned separately, so that the first inserting portion 121 and the second inserting portion 122 can abut against the first surface 1111 and the second surface 1121. In another embodiment of this application, to reduce difficulty of machining, the projections of the first channel 111 and the second channel 112 partially overlap, are spaced apart, or are arranged as connected in edge.

FIG. 7 shows an embodiment in which projections of the first channel 111 and the second channel 112 partially overlap. The first channel 111 and the second channel 112 are arranged along the direction z. Correspondingly, the first inserting portion 121 and the second inserting portion 122 are spaced apart along the direction z. As shown in FIG. 7, the first channel 111 is located above the direction z relative to the second channel 112, the first surface 1111 is located at an inner wall on the right side of the first channel 111, and the second surface 1121 is located at an inner wall on the left side of the second channel 112. In this case, the first inserting portion 121 fits with the first surface 1111 to restrict moving of the second inserting portion 122 to the right, and the second inserting portion 122 fits with the second surface 1121 to restrict moving of the first inserting portion 121 to the left, so that the first inserting portion 121 and the second inserting portion 122 restrain each other for positioning, implementing accurate positioning of the partition 12.

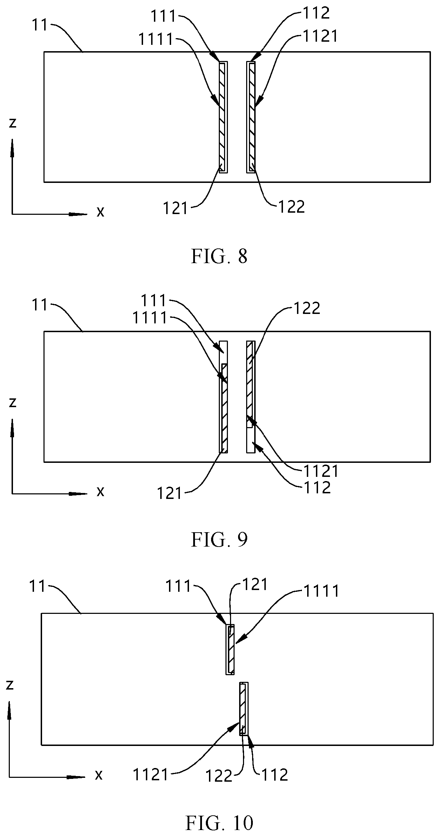

FIG. 8 to FIG. 11 show embodiments in which projections of the first channel 111 and the second channel 112 are spaced apart. The first channel 111 and the second channel 112 may be arranged along the direction x. Correspondingly, the first inserting portion 121 and the second inserting portion 122 are spaced apart along the direction x.

In some embodiments, as shown in FIG. 8, the first channel 111 and the second channel 112 are arranged along the direction x, the first channel 111 is, relative to the second channel 112, on the right side of the end plate 11 in the width direction, the first surface 1111 is located at an inner wall on the left side of the first channel 111, and the second surface 1121 is located at an inner wall on the right side of the second channel 112. In this case, the first inserting portion 121 fits with the first surface 1111 to restrict leftward movement of the second inserting portion 122, and the second inserting portion 122 fits with the second surface 1121 to restrict rightward movement of the first inserting portion 121, so that the first inserting portion 121 and the second inserting portion 122 restrain each other and for positioning, implementing positioning of the partition 12. Similarly, the first surface 1111 may alternatively be located at the inner wall on the right side of the first channel 111, and the second surface 1121 may alternatively be located at the inner wall on the left side of the second channel 112.

In some embodiments, as shown in FIG. 9, the first channel 111 and the second channel 112 are arranged along the direction x, the first channel 111 is, relative to the second channel 112, on the right side of the end plate 11 in the width direction, the first surface 1111 is located at an inner wall on the lower side of the first channel 111, and the second surface 1121 is located at an inner wall on the upper side of the second channel 112. The first inserting portion 121 abuts against the first surface 1121, and the second inserting portion 122 abuts against the second surface 1121. In this case, the first inserting portion 121 fits with the first surface 1111 to restrict downward movement of the second inserting portion 122, and the second inserting portion 122 fits with the second surface 1121 to restrict upward movement of the first inserting portion 121, so that the first inserting portion 121 and the second inserting portion 122 restrain each other, and the partition 12 and the end plate 11 are fixed in the direction z, in other words, the partition 12 is positioned in the height direction of the end plate 11. In this way, the position of each inserting portion in the corresponding channel can be adjusted in the width direction of the end plate 11, implementing accurate positioning of the partition 12. Similarly, the first surface 1111 may alternatively be located at the inner wall on the upper side of the first channel 111, and the second surface 1121 may alternatively be located at the inner wall on the lower side of the second channel 112.

In some embodiments, as shown in FIG. 10, the first channel 111 and the second channel 112 are arranged along the direction z, the first channel 111 is above the width direction of the end plate 11 relative to the second channel 112, the first surface 1111 is located at an inner wall on the right side of the first channel 111, and the second surface 1121 is located at an inner wall on the left side of the second channel 112 and faces to the right. In this case, the first inserting portion 121 fits with the first surface 1111 to restrict rightward movement of the second inserting portion 122, and the second inserting portion 122 fits with the second surface 1121 to restrict leftward movement of the first inserting portion 121, so that the first inserting portion 121 and the second inserting portion 122 restrain each other for positioning, thereby implementing positioning of the partition 12 in the direction x. Similarly, the first surface 1111 may alternatively be located at the inner wall on the left side of the first channel 111, and the second surface 1121 may alternatively be located at the inner wall on the right side of the second channel 112.

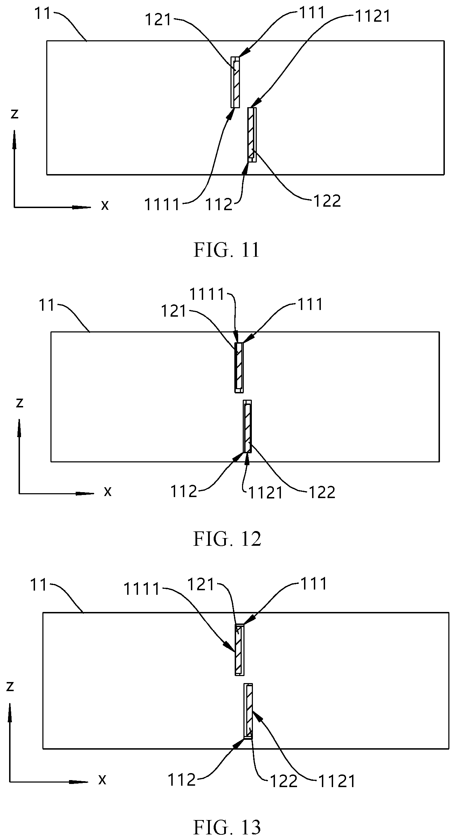

In some embodiments, as shown in FIG. 11, the first channel 111 and the second channel 112 are arranged along the direction z, the first channel 111 is above the width direction of the end plate 11 relative to the second channel 112, the first surface 1111 is located at an inner wall on the lower side of the first channel 111, and the second surface 1121 is located at an inner wall on the upper side of the second channel 112. The first inserting portion 121 abuts against the first surface 1111, and the second inserting portion 122 abuts against the second surface 1121. In this case, the first inserting portion 121 fits with the first surface 1111 to restrict downward movement of the second inserting portion 122, and the second inserting portion 122 fits with the second surface 1121 to restrict upward movement of the first inserting portion 121, so that the first inserting portion 121 and the second inserting portion 122 restrain each other, and the partition 12 and the end plate 11 are fixed in the direction z, in other words, the partition 12 is positioned in the height direction of the end plate 11. In this way, the position of each inserting portion in the corresponding channel can be adjusted in the width direction of the end plate 11, implementing accurate positioning of the partition 12. Similarly, the first surface 1111 may alternatively be located at the inner wall on the upper side of the first channel 111, and the second surface 1121 may alternatively be located at the inner wall on the lower side of the second channel 112.

FIG. 12 to FIG. 14 show embodiments in which projections of the first channel 111 and the second channel 112 are connected in edge. The first channel 111 and the second channel 112 may be arranged along the direction z. Correspondingly, the first inserting portion 121 and the second inserting portion 122 are spaced apart along the direction z.

In some embodiments, as shown in FIG. 12, the first channel 111 and the second channel 112 are arranged along the direction z, the first channel 111 is above the width direction of the end plate 11 relative to the second channel 112, the first surface 1111 is formed at an inner wall on the upper side of the first channel 111, and the second surface 1121 is formed at an inner wall on the lower side of the second channel 112, the first inserting portion 121 abuts against the first surface 1111, and the second inserting portion 122 abuts against the second surface 1121. In this case, the first inserting portion 121 fits with the first surface 1111 to restrict upward movement of the second inserting portion 122, and the second inserting portion 122 fits with the second surface 1121 to restrict downward movement of the first inserting portion 121, so that the first inserting portion 121 and the second inserting portion 122 restrain each other, and the partition 12 and the end plate 11 are fixed in the direction z, in other words, the partition 12 is positioned in the height direction of the end plate 11. In this way, the position of each inserting portion in the corresponding channel can be adjusted in the width direction of the end plate 11, implementing accurate positioning of the partition 12. Similarly, the first surface 1111 may alternatively be formed at the inner wall on the lower side of the first channel 111, and the second surface 1121 may alternatively be formed at the inner wall on the upper side of the second channel 112.

In some embodiments, as shown in FIG. 13, the first channel 111 and the second channel 112 are arranged along the direction z, the first channel 111 is above the width direction of the end plate 11 relative to the second channel 112, the first surface 1111 is an inner wall on the left side of the first channel 111, and the second surface 1121 is an inner wall on the right side of the second channel 112. The first inserting portion 121 abuts against the first surface 1111, and the second inserting portion 122 abuts against the second surface 1121. In this case, the first inserting portion 121 fits with the first surface 1111 to restrict leftward movement of the second inserting portion 122, and the second inserting portion 122 fits with the second surface 1121 to restrict rightward movement of the first inserting portion 121, so that the first inserting portion 121 and the second inserting portion 122 restrain each other for positioning, implementing accurate positioning of the partition 12.

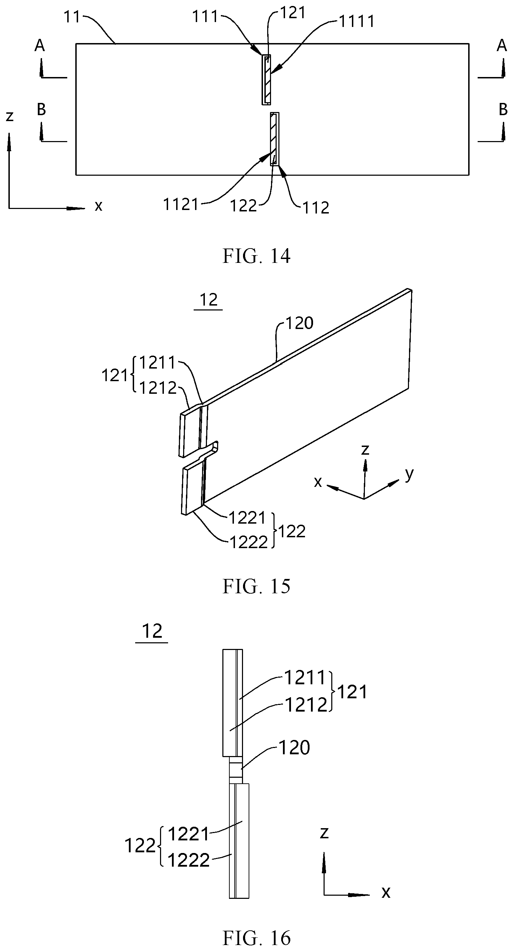

Similarly, in some other embodiments, as shown in FIG. 14, the first surface 1111 may alternatively be located at the inner wall on the right side of the first channel 111, and the second surface 1121 may alternatively be located at the inner wall on the left side of the second channel 112. The first inserting portion 121 abuts against the first surface 1111, and the second inserting portion 122 abuts against the second surface 1121, so that the first inserting portion 121 fits with the first surface 1111 to restrict rightward movement of the second inserting portion 122, and the second inserting portion 122 fits with the second surface 1121 to restrict leftward movement of the first inserting portion 121. In this way, the first inserting portion 121 and the second inserting portion 122 restrain each other for positioning, implementing accurate positioning of the partition 12.

In the embodiment shown in FIG. 14, projections of the first surface 1111 and the second surface 1121 on the bottom surface of the end plate 11 in the height direction of the end plate 11 overlap. In this way, the first surface 1111 and the second surface 1121 are located on a same position in the width direction of the end plate 11, making it easy to determine, before assembly, whether an installation position of the partition board 12 is accurate, so as to better position the partition 12.

For example, in a case that both an abutting surface of the first inserting portion 121 and an abutting surface of the second inserting portion 122 are on a central plane in the thickness direction of the partition 12, the central plane in the thickness direction of the partition 12 is coplanar with the first surface 1111 and the second surface 1121. Before the partition 12 and the end plate 11 are connected, a test may be performed on the end plate 11, to determine whether the partition 12 can be accurately positioned. Specifically, positions of the first surface 1111 and the second surface 1121 relative to the width direction of the end plate 11 are first determined, and the positions are compared with a central plane in the thickness direction of a setting position of the partition 12 in the width direction of the end plate 11. A comparison result of substantial consistency indicates that the end plate 11 is manufactured up to standard; or a comparison result of large deviation indicates that the end plate 11 is not manufactured up to standard. In this way, a problem that the partition 12 cannot be accurately positioned due to manufacturing deviation of the end plate 11 can be eliminated.

In some embodiments, both the first surface 1111 and the second surface 1121 are on a central plane in the width direction of the end plate 11. In this way, structural strength on two sides of the central plane in the width direction of the end plate 11 is the same, and the end plate 11 has uniform strength and is not prone to local damage. In a case that the central plane in the thickness direction of the partition 12 is configured to be coplanar with the first surface 1111 and the second surface 1121, the partition 12 can accurately divide the internal space of the box assembly 1 into two roughly equal parts.

In the foregoing embodiments, for example, in the embodiment shown in FIG. 14, in the case that the first inserting portion 121 and the second inserting portion 122 are arranged along the direction z, and the first direction and the second direction are the direction x, the partition 12 is subjected to two binding forces in the height direction, which prevents an upper edge or a lower edge of the partition 12 from tilting, ensuring accurate positioning of the partition 12.

It should be noted that, in any one of the foregoing embodiments, regardless of an arrangement direction of the channel, each channel may further be configured as having an inner wall for abutting against the inserting portion of the partition 12 in the width direction (namely, the direction x) of the end plate 11 and in the height direction (namely, the direction z) of the end plate 11, respectively. In other words, the first channel 111 is provided with a first surface 1111 in the width direction of the end plate 11, and the first channel 111 is also provided with a first surface 1111 in the height direction of the end plate 11. When the first inserting portion 121 inserts into the first channel 111, the first inserting portion 121 also abuts against the two first surfaces 1111. The second channel 112 is provided with a second surface 1121 in the width direction of the end plate 11, and the second channel 112 is also provided with a second surface 1121 in the height direction of the end plate 11. When the second inserting portion 122 inserts into the second channel 112, the second inserting portion 122 also abuts against the two second surfaces 1121. In this way, the first inserting portion 121 and the second inserting portion 122 restrain each other and both cannot move in the direction x, thus the partition 12 can be accurately positioned in the direction x and direction y, improving a positioning effect.

To further ensure a good positioning effect after the first inserting portion 121 and the second inserting portion 122 enter corresponding channels and increased restraining force between the first inserting portion 121 and the second inserting portion 122, the first inserting portion 121 and the second inserting portion 122 each include a connecting region and a bending region. Specifically, the first inserting portion 121 includes a first inserting portion connecting region 1212 and a first inserting portion bending region 1211, and the second inserting portion 122 includes a second inserting portion connecting region 1222 and a second inserting portion bending region 1221.

As shown in FIG. 15 and FIG. 16, the partition 12 further includes a body 120, where each inserting portion has one end connected to an end portion of the body 120, and the first inserting portion 121 and the second inserting portion 122 are located at a same end portion of the body 120. An inserting portion bending region connects the body 120 and a connecting region, and an inserting portion connecting region is configured to insert into a corresponding channel and abut against an inner wall of this channel.

As compared with a case of absence of a bending region, the connecting region is connected to the body 120 through the bending region, which increases flexibility of the inserting portion, thereby increasing abutting force of the inserting portion and improving a restraining effect.

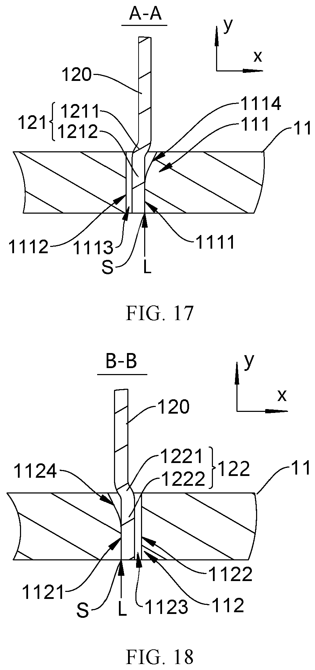

In this application, a size of each channel can be expanded appropriately, and a manufacturing tolerance of each channel can be relaxed, which does not affect positioning of the inserting portion, and facilitates insertion of the inserting portion into the corresponding channel. Therefore, as shown in FIG. 17, the first inserting portion 121 is formed as being in clearance fit with the first channel 111, and as shown in FIG. 18, the second inserting portion 122 is formed as being in clearance fit with the second channel 112.

In other word, as shown in FIG. 17, the inner wall of the first channel 111 further includes a third surface 1112, where the third surface 1112 is opposite to the first surface 1111. When the first inserting portion 121 inserts into the first channel 111, the first inserting portion 121 abuts against the first surface 1111, and a first clearance 1113 is present between the first inserting portion 121 and the third surface 1112. As shown in FIG. 18, the inner wall of the second channel 112 further includes a fourth surface 1122, where the fourth surface 1122 is opposite to the second surface 1121. When the second inserting portion 122 inserts into the second channel 112, the second inserting portion 122 abuts against the second surface 1121, and a second clearance 1123 is present between the second inserting portion 122 and the fourth surface 1122.

For ease of insertion of the first inserting portion 121 into the first channel 111, as shown in FIG. 17, the first channel 111 is provided with a first guide slope 1114 on an end close to the partition 12, where the first guide slope 1114 connects the first surface 1111 and a surface of a side of the end plate 11 close to the partition 12. The first guide slope 1114 is configured to guide a first inserting portion connecting region 1212 to insert into the first channel 111, and a first inserting portion bending region 1211 undergoes slight elastic deformation to drive the first inserting portion connecting region 1212 to cling to the first surface 1111. For ease of insertion of the second inserting portion 122 into the second channel 112, as shown in FIG. 18, the second channel 112 is provided with a second guide slope 1124 on an end close to the partition 12, where the second guide slope 1124 connects the second surface 1121 and the surface of the side of the end plate 11 close to the partition 12. The second guide slope 1124 is configured to guide a second inserting portion connecting region 1222 to insert into the second channel 112, and a second inserting portion bending region 1221 undergoes slight elastic deformation to drive the second inserting portion connecting region 1222 to cling to the second surface 1121.

The inserting portion is formed in many manners. The inserting portion may be separately formed relative to the body 120 of the partition 12. For example, an inserting portion with a connecting region and a bending region is first formed, and then an end of the bending region away from the connecting region is connected to the body 120 of the partition 12.

The inserting portion may also be integrally formed with the body 120 of the partition 12. For example, a plurality of inserting portions that are spaced apart in the height direction of the partition 12 are formed on one end in the width direction of the body 120 of the partition 12, where the plurality of inserting portions are separately stamped and deformed, so that a connecting part of the inserting portion and the body 120 bends to form a bending region, and a part of the inserting portion away from the body 120 extends in the width direction of the partition 12 to form a connecting region, facilitating insertion into a corresponding channel.

Projections of the bending region on the bottom surface of the partition 12 in the height direction of the partition 12 may be of a plurality of shapes, for example, an arc shape, a wave shape, or a straight line leaning to one side in the thickness direction of the partition 12.

In some embodiments, as shown in FIG. 16, FIG. 17, and FIG. 18, the first inserting portion connecting region 1212 shifts toward a side in the thickness direction of the partition 12 relative to the body 120, and a step located between the connecting region and the body 120 is formed in the first inserting portion bending region 1211; and the second inserting portion connecting region 1222 shifts toward another side in the thickness direction of the partition 12 relative to the body 120, and a step located between the connecting region and the body 120 is formed in the first inserting portion bending region 1211.

To ensure accurate positioning of the partition 12 and prevent inaccurate positioning caused by shifting of the partition 12 during use of the battery 100, in some embodiments, each inserting portion is connected to the inner wall of the fitting channel at an abutting position to form a connecting seam S, where the connecting manner may be bonding, welding, or the like. For example, the first inserting portion 121 is welded to the abutting position of the first surface 1111, and the second inserting portion 122 is welded to the abutting position of the second surface 1121.

In order to prevent laser L for welding from entering the box assembly 1 through a gap between the inserting portion and the inner wall of the channel against which the inserting portion abuts to cause burn to an internal structure or the battery cell 2 in a welding process, the foregoing bending region is configured to shield the connecting seam S in the thickness direction of the end plate 11 (or the width direction of the end plate 11 or the direction x).

For example, as shown in FIG. 16 and FIG. 17, the first inserting portion bending region 1211 shifts leftward in the direction x relative to the body 120, so that a right side surface of the first inserting portion connecting region 1212 shifts leftward relative to a right side surface of the body 120. When the first inserting portion 121 inserts into the first channel 111, the right side surface of the first inserting portion connecting region 1212 abuts against the first surface 1111 of the first channel 111, and an extended surface of the first surface 1111 passes through the bending region 1211 of the first inserting portion. In this way, when the right side surface of the first inserting portion connecting region 1212 is welded to the first surface 1111, the laser L (an irradiation direction of the laser is marked by an arrow in FIG. 17) passing through a gap between the right side surface of the first inserting portion connecting region 1212 and the first surface 1111 is blocked by the first inserting portion bending region 1211, preventing the laser L from entering into the box assembly 1, and avoiding a safety problem caused by burning or heating.

Similarly, as shown in FIG. 16 and FIG. 18, the second inserting portion bending region 1221 shifts rightward in the direction x relative to the body 120, so that a left side surface of the second inserting portion connecting region 1222 shifts rightward relative to a left side surface of the body 120. When the second inserting portion 122 inserts into the second channel 112, the left side surface of the second inserting portion connecting region 1222 abuts against the second surface 1121 of the second channel 112, and an extended surface of the second surface 1121 passes through the second inserting portion bending region 1221. In this way, when the right side surface of the first inserting portion connecting region 1222 is welded to the first surface 1121, the laser L (an irradiation direction of the laser is marked by an arrow in FIG. 18) passing through a gap between the right side surface of the first inserting portion connecting region 1222 and the first surface 1121 is blocked by the first inserting portion bending region 1221, preventing the laser L from entering into the box assembly 1, and avoiding a safety problem caused by burning or heating.

During use of the battery 100, the battery cell 2 sometimes swells with charge and discharge, and the swelling battery cell 2 is prone to extrude the box assembly 1. The end plate 11 being extruded is prone to cause pull cracks of the connecting seam S between the end plate 11 and the partition 12. The damaged box assembly 1 has reduced safety, and service life of the battery 100 is shortened. In this application, the inserting portion including the bending region can effectively alleviate the problem that the connecting seam S of the welding part is damaged due to too large tensile force.

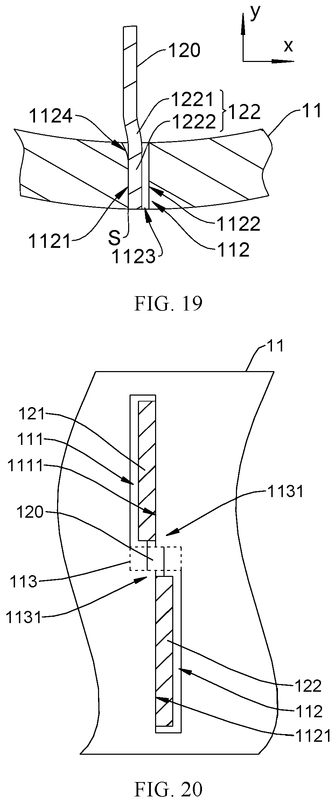

As shown in FIG. 19, the end plate 11 deforms in a thickness direction when extruded (that is, the end plate 11 deforms in the direction y), the connecting seam S between the end plate 11 and the partition 12 is subjected to a tensile force in the direction y, and a bending region of the partition 12 approaches the body 120 in the direction y from an offset position. The bending region is used to disperse stress when the partition 12 is stretched, so as to alleviate the damage of the connecting seam S between the partition 12 and the end plate 11 due to too large tensile force, preventing the box assembly 1 from being damaged or disassembled and prolonging service life of the battery 100. In addition, provision of the bending region on the partition 12 allows the box assembly 1 to have some deformation allowance when the battery cell 2 swells, so that the battery cell 2 is prevented from being over-extruded to cause a safety problem, and a swelling force is released.

To further prevent damage to the box assembly 1, each connecting region of the partition 12 and the bending region are equal in thickness to the body 120. In other words, a thickness of the first inserting portion connecting region 1212, a thickness of the first inserting portion bending region 1211, a thickness of the second inserting portion connecting region 1222, and a thickness of the second inserting portion bending region 1221 are the same as that of the body 120. When the partition 12 is subjected to a tensile force, a part is not damaged due to being thinner than another part, which ensures integrity of the partition 12, thereby preventing damage to the partition 12 which leads to decrease of structural strength of the box assembly 1 and affects service life of the battery 100.

In order to prevent damage to the connecting seam S between the partition 12 and the end plate 11, in some embodiments, the end plate 11 is further provided with a connecting groove 113, where the at least two channels provided on the end plate 11 communicate with each other through the connecting groove 113, that is, two adjacent channels communicate with each other through the connecting groove 113. As shown in FIG. 20 to FIG. 24, the first channel 111 and the second channel 112 communicate with each other through the connecting groove 113, so that a weak region 1131 is formed at a position where the first channel 111 and the connecting groove 113 connect, and a weak region 1131 is formed at a position where the second channel 112 and the connecting groove 113 connect. An inner wall of the first channel 111 close to the weak region 1131 may serve as a first surface 1111, and an inner wall of the second channel 112 close to the weak region 1131 may serve as a second surface 1121. In this way, when the connecting seam S between the partition 12 and the end plate 11 is under tension, the weak region 1131 deforms to disperse stress.

The connecting groove 113 may be configured to extend in the width direction of the end plate 11, extend in the height direction of the end plate 11, or extend obliquely to connect the first channel 111 and the second channel 112. The following listing of some provision situations of the connecting groove 113 is only for ease of description of a provision manner of the connecting groove 113, and is not regarded as a limit manner on provision of the connecting groove 113 on the first channel 111 and the second channel 112 in a specified situation.

As shown in FIG. 20, the first channel 111 and the second channel 112 are arranged along the height direction of the end plate 11, the two projections of the first channel 111 and the second channel 112 on the bottom surface of the end plate 11 in the height direction of the end plate 11 are arranged as connected in edge. The connecting groove 113 is shown in dotted lines in the figure, and the connecting groove 113 extends along the width direction of the end plate 11 to communicate the first channel 111 and the second channel 112. As shown in FIG. 20, when the connecting seam S between the partition 12 and the end plate 11 is under tension, a corner formed by the end plate 11 on the first surface 1111 close to the second channel 112 and an adjacent connected part deform, and a corner formed by the end plate 11 on the second surface 1121 close to the first channel 111 and an adjacent connected part deform, so as to disperse stress and release swelling force.

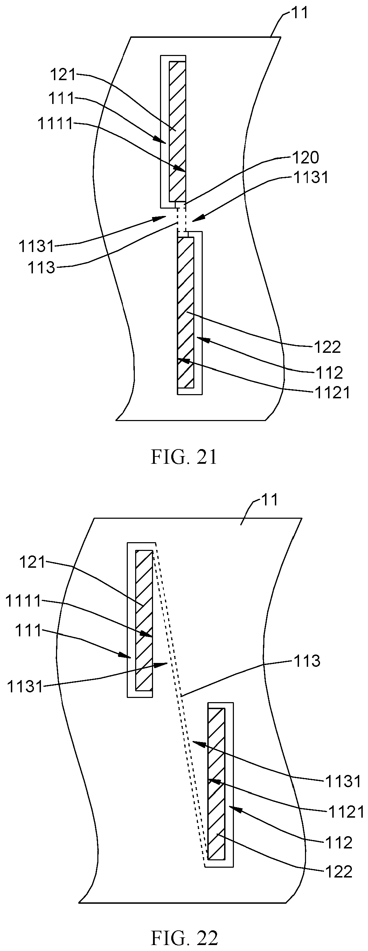

As shown in FIG. 21, the first channel 111 and the second channel 112 are arranged along the height direction of the end plate 11, the two projections of the first channel 111 and the second channel 112 on the bottom surface of the end plate 11 in the height direction of the end plate 11 partially overlap. The connecting groove 113 is shown in dotted lines in the figure, and the connecting groove 113 extends along the height direction of the end plate 11 to communicate the first channel 111 and the second channel 112. As shown in the figure, when the connecting seam S between the partition 12 and the end plate 11 is under tension, a corner formed by the end plate 11 on the first surface 1111 close to the second channel 112 and an adjacent connected part deform, and a corner formed by the end plate 11 on the second surface 1121 close to the first channel 111 and an adjacent connected part deform, so as to disperse stress and release swelling force.

As shown in FIG. 22, the first channel 111 and the second channel 112 are arranged along the height direction of the end plate 11, the two projections of the first channel 111 and the second channel 112 on the bottom surface of the end plate 11 in the height direction of the end plate 11 are spaced apart. The connecting groove 113 is shown in dotted lines in the figure, and the connecting groove 113 extends obliquely to communicate the first channel 111 and the second channel 112. As shown in FIG. 22, when the connecting seam S between the partition 12 and the end plate 11 is under tension, a corner formed by the end plate 11 on the first surface 1111 close to the second channel 112 and an adjacent connected part deform, and a corner formed by the end plate 11 on the second surface 1121 away from the first channel 111 and an adjacent connected part deform, so as to disperse stress and release swelling force.

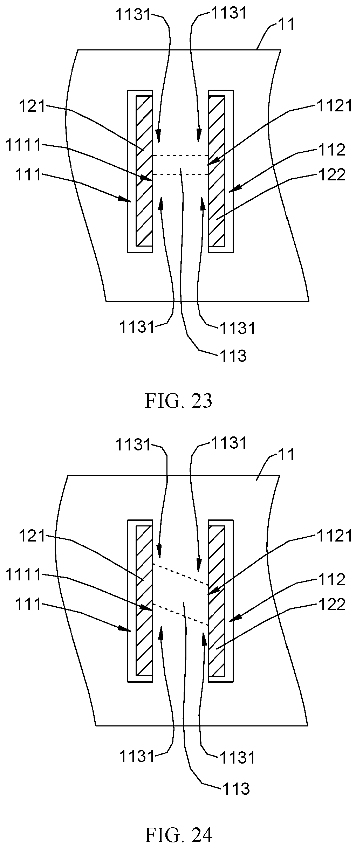

When the first channel 111 and the second channel 112 are arranged along the width direction of the end plate 11, the two projections of the first channel 111 and the second channel 112 on the bottom surface of the end plate 11 in the height direction of the end plate 11 are spaced apart. The connecting groove 113 may be as follows: as shown in FIG. 23, the connecting groove 113 extends along the width direction of the end plate 11 to communicate the first channel 111 and the second channel 112; or the connecting groove 113 extends obliquely to communicate the first channel 111 and the second channel 112, as shown in FIG. 24.

The connecting groove 113 mentioned in the embodiments of this application may be configured to penetrate the end plate 11 in the thickness direction of the end plate 11, or may be configured as a groove formed on a surface of the end plate 11 away from the partition 12.

The electric device, the battery 100, and the box assembly 1 in the embodiments of this application are described above, and a manufacturing method and apparatus of the battery assembly 1 in the embodiments of this application are described below. For content that is not described in detail, refer to the foregoing embodiments.

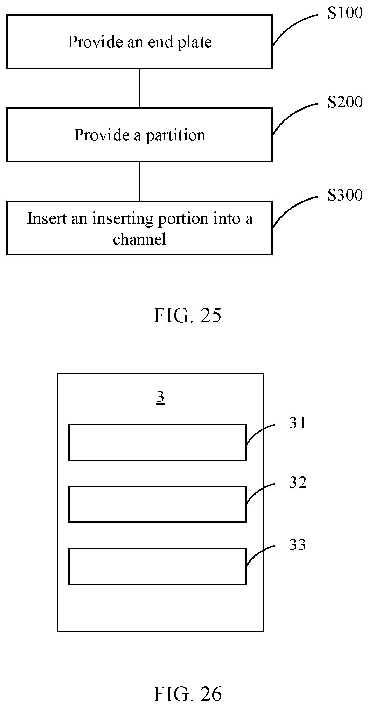

FIG. 25 is a flowchart of a manufacturing method of a box assembly 1 according to an embodiment of this application, where the method may include the following steps.

S100. Provide an end plate 11, where the end plate 11 is provided with at least two channels.

S200. Provide a partition 12, where the partition 12 is configured to be connected to the end plate 11 and separate an internal space of the box assembly 1; the partition 12 includes a body 120 and at least two inserting portions located on an end of the body 120, each of the inserting portions including a connecting region and a bending region, with the connecting region connected to the body 120 through the bending region; and each channel of the at least two channels fits with at least one inserting portion, so that the connecting region of each inserting portion abuts against an inner wall of a fitting channel, allowing the partition 12 to be connected to the end plate 11.

S300. Insert the inserting portion into the channel.

It should be noted that a sequence of step S100 and step S200 is not limited. For example, step S100 and step S200 may be performed in turn; for another example, step S200 may be performed before step S100; and for another example, step S100 and step S200 are performed simultaneously.

FIG. 26 is a schematic block diagram of a manufacturing apparatus 3 of a box assembly 1 according to an embodiment of this application, where the apparatus 3 includes a first providing apparatus 31, a second providing apparatus 32, and an assembly apparatus 33.

The first providing apparatus 31 is configured to provide an end plate 11, where the end plate 11 is provided with at least two channels.

The second providing apparatus 32 is configured to provide a partition 12, where the partition 12 is configured to be connected to the end plate 11 and separate an internal space of the box assembly 1; the partition 12 includes a body 120 and at least two inserting portions located on an end of the body 120, each of the inserting portions including a connecting region and a bending region, with the connecting region connected to the body 120 through the bending region; and each channel of the at least two channels fits with at least one inserting portion, so that the connecting region of each inserting portion abuts against an inner wall of a fitting channel, allowing the partition 12 to be connected to the end plate 11.

The assembly apparatus 33 is configured to insert the inserting portion into the channel.

The foregoing descriptions are merely preferred embodiments of this application, but are not intended to limit this application. Persons skilled in the art understand that this application may have various modifications and variations within the scope defined by the claims.

## Claims

1. A battery box assembly (1), comprising:
an end plate (11), wherein the end plate (11) is provided with at least two channels, wherein two projections of the at least two channels on the bottom surface of the end plate (11) in the height direction of the end plate (11) partially overlap or are spaced apart, or the two projections are arranged as connected in edge, and a connecting groove (113) is further formed on the end plate (11), and the at least two channels communicate with each other through the connecting groove (113); and
a partition (12), wherein the partition (12) is configured to be connected to the end plate (11) and separate an internal space of the box assembly (1); and the partition (12) comprises a body (120) and at least two inserting portions located on an end of the body (120), each of the inserting portions having an end connected to an end portion of the body (120), and each of the inserting portion comprising a connecting region and a bending region, with the connecting region connected to the body (120) through the bending region; wherein
each channel of the at least two channels fits with at least one of the inserting portions by inserting, so that the connecting region of each of the inserting portions abuts against an inner wall of a fitting channel, allowing the partition (12) to be connected to the end plate (11).

2. The battery box assembly (1) according to claim 1, wherein the at least two channels comprise a first channel (111) and a second channel (112), wherein an inner wall of the first channel (111) comprises a first surface (1111), the first surface (1111) facing toward a first direction; an inner wall of the second channel (112) comprises a second surface (1121), the second surface (1121) facing toward a second direction; and the first direction is opposite to the second direction; and
the at least two inserting portions comprise a first inserting portion (121) and a second inserting portion (122), wherein the first inserting portion (121) is configured to fit with the first channel (111) by inserting, and the first inserting portion (121) abuts against the first surface (1111); and the second inserting portion (122) is configured to fit with the second channel (112), and the second inserting portion (122) abuts against the second surface (1121).

3. The battery box assembly (1) according to claim 2, wherein both the first direction and the second direction are parallel to a width direction of the end plate (11).

4. The battery box assembly (1) according to claim 2 or 3, wherein the first channel (111) and the second channel (112) are arranged along a height direction of the end plate (11).

5. The battery box assembly (1) according to claims 2 to 4, wherein projections of the first surface (1111) and the second surface (1121) on a bottom surface of the end plate (11) in the height direction of the end plate (11) overlap, preferably wherein the first surface (1111) and the second surface (1121) are located on a central plane in the width direction of the end plate (11).

6. The battery box assembly (1) according to any one of claims 2 to 5, wherein the inner wall of the first channel (111) further comprises a third surface (1112) opposite the first surface (1111), and a first clearance (1113) is present between the first inserting portion (121) and the third surface (1112); and
the inner wall of the second channel (112) further comprises a fourth surface (1122) opposite the second surface (1121), and a second clearance (1123) is present between the second inserting portion (122) and the fourth surface (1122).

7. The battery box assembly (1) according to any one of claims 2 to 6, wherein the first channel (111) is provided with a first guide slope (1114) on an end close to the partition (12), and the first guide slope (1114) is configured to guide the first inserting portion (121) to insert into the first channel (111), and the second channel (112) is provided with a second guide slope (1124) on an end close to the partition (12), and the second guide slope (1124) is configured to guide the second inserting portion (122) to insert into the second channel (112); and/or
wherein the first inserting portion (121) and the second inserting portion (122) are spaced apart along a height direction of the partition (12).

8. The battery box assembly (1) according to any one of claims 1 to 7, wherein each of the inserting portions and the inner wall of the channel fitting this inserting portion are connected at an abutting position to form a connecting seam (S); and the inserting portion and the partition (12) are welded to each other at the connecting seam (S), preferably wherein the bending region is configured to shield the connecting seam (S) in a thickness direction of the end plate (11).

9. The battery box assembly (1) according to any one of claims 1 to 8, wherein the connecting region shifts relative to the body (120) toward a side in a thickness direction of the partition (12), and the bending region is a step disposed between the connecting region and the body (120).

10. The battery box assembly (1) according to any one of claims 1 to 9, wherein each of the connecting regions and each of the bending regions are equal in thickness to the body (120).

11. The battery box assembly (1) according to any one of claims 1 to 10, wherein each of the connecting regions and the body (120) are integrally formed.

12. A battery (100), comprising the battery box assembly (1) according to any one of claims 1 to 11.

13. An electric device, comprising the battery (100) according to claim 12.

14. A manufacturing method of a battery box assembly, comprising:
providing (S100) an end plate, wherein the end plate is provided with at least two channels, wherein two projections of the at least two channels on the bottom surface of the end plate in the height direction of the end plate partially overlap or are spaced apart, or the two projections are arranged as connected in edge, and a connecting groove is further formed on the end plate, and the at least two channels communicate with each other through the connecting groove;
providing (S200) a partition, wherein the partition is configured to be connected to the end plate and separate an internal space of the box assembly; the partition comprises a body and at least two inserting portions located on an end of the body, each of the inserting portions comprising a connecting region and a bending region, with the connecting region connected to the body through the bending region; and each channel of the at least two channels fits with the at least one inserting portion by inserting, so that the connecting region of each of the inserting portions abuts against an inner wall of a fitting channel, allowing the partition to be connected to the end plate; and
inserting (S300) the inserting portion into the channel.

## Patentansprüche

1. Batteriekastenanordnung (1), umfassend:
eine Endplatte (11), wobei die Endplatte (11) mit mindestens zwei Kanälen versehen ist, wobei zwei Vorsprünge der mindestens zwei Kanäle auf der unteren Oberfläche der Endplatte (11) in der Höhenrichtung der Endplatte (11) teilweise überlappen oder voneinander beabstandet sind, oder die zwei Vorsprünge als in einer Kante verbunden angeordnet sind, und eine Verbindungsnut (113) ferner auf der Endplatte (11) ausgebildet ist, und die mindestens zwei Kanäle durch die Verbindungsnut (113) miteinander kommunizieren; und
eine Trennwand (12), wobei die Trennwand (12) konfiguriert ist, um mit der Endplatte (11) verbunden zu werden und einen Innenraum der Kastenanordnung (1) zu trennen; und die Trennwand (12) einen Körper (120) und mindestens zwei Einsetzabschnitte umfasst, die sich an einem Ende des Körpers (120) befinden, wobei jeder der Einsetzabschnitte ein Ende aufweist, das mit einem Endabschnitt des Körpers (120) verbunden ist, und jeder der Einsetzabschnitte einen Verbindungsbereich und einen Biegebereich umfasst, wobei der Verbindungsbereich durch den Biegebereich mit dem Körper (120) verbunden ist; wobei
jeder Kanal der mindestens zwei Kanäle in mindestens einen der Einsetzabschnitte durch Einsetzen passt, so dass der Verbindungsbereich jedes der Einsetzabschnitte gegen eine Innenwand eines passenden Kanals anstößt, was es der Trennwand (12) ermöglicht, mit der Endplatte (11) verbunden zu werden.

2. Batteriekastenanordnung (1) nach Anspruch 1, wobei die mindestens zwei Kanäle einen ersten Kanal (111) und einen zweiten Kanal (112) umfassen, wobei eine Innenwand des ersten Kanals (111) eine erste Oberfläche (1111) umfasst, wobei die erste Oberfläche (1111) in eine erste Richtung weist; eine Innenwand des zweiten Kanals (112) eine zweite Oberfläche (1121) umfasst, wobei die zweite Oberfläche (1121) in eine zweite Richtung weist; und die erste Richtung der zweiten Richtung gegenüber ist; und
die mindestens zwei Einsetzabschnitte einen ersten Einsetzabschnitt (121) und einen zweiten Einsetzabschnitt (122) umfassen, wobei der erste Einsetzabschnitt (121) konfiguriert ist, um in den ersten Kanal (111) durch Einsetzen zu passen, und der erste Einsetzabschnitt (121) gegen die erste Oberfläche (1111) anstößt; und der zweite Einsetzabschnitt (122) konfiguriert ist, um in den zweiten Kanal (112) zu passen, und der zweite Einsetzabschnitt (122) gegen die zweite Oberfläche (1121) anstößt.

3. Batteriekastenanordnung (1) nach Anspruch 2, wobei sowohl die erste Richtung als auch die zweite Richtung parallel zu einer Breitenrichtung der Endplatte (11) sind.

4. Batteriekastenanordnung (1) nach Anspruch 2 oder 3, wobei der erste Kanal (111) und der zweite Kanal (112) entlang einer Höhenrichtung der Endplatte (11) angeordnet sind.

5. Batteriekastenanordnung (1) nach Ansprüchen 2 bis 4, wobei sich Vorsprünge der ersten Oberfläche (1111) und der zweiten Oberfläche (1121) an einer unteren Oberfläche der Endplatte (11) in der Höhenrichtung der Endplatte (11) überlappen, vorzugsweise wobei sich die erste Oberfläche (1111) und die zweite Oberfläche (1121) in der Breitenrichtung der Endplatte (11) in einer Mittelebene befinden.

6. Batteriekastenanordnung (1) nach einem der Ansprüche 2 bis 5, wobei die Innenwand des ersten Kanals (111) ferner eine dritte Oberfläche (1112) gegenüber der ersten Oberfläche (1111) umfasst und ein erster Zwischenraum (1113) zwischen dem ersten Einsetzabschnitt (121) und der dritten Oberfläche (1112) vorhanden ist; und
die Innenwand des zweiten Kanals (112) ferner eine vierte Oberfläche (1122) gegenüber der zweiten Oberfläche (1121) umfasst, und ein zweiter Zwischenraum (1123) zwischen dem zweiten Einsetzabschnitt (122) und der vierten Oberfläche (1122) vorhanden ist.

7. Batteriekastenanordnung (1) nach einem der Ansprüche 2 bis 6, wobei der erste Kanal (111) mit einer ersten Führungsschräge (1114) an einem Ende nahe der Trennwand (12) versehen ist, und die erste Führungsschräge (1114) konfiguriert ist, um den ersten Einsetzabschnitt (121) zum Einsetzen in den ersten Kanal (111) zu führen, und der zweite Kanal (112) mit einer zweiten Führungsschräge (1124) an einem Ende nahe der Trennwand (12) versehen ist, und die zweite Führungsschräge (1124) konfiguriert ist, um den zweiten Einsetzabschnitt (122) so zu führen, dass er in den zweiten Kanal (112) eingesetzt wird; und/oder
wobei der erste Einsetzabschnitt (121) und der zweite Einsetzabschnitt (122) entlang einer Höhenrichtung der Trennwand (12) voneinander beabstandet sind.

8. Batteriekastenanordnung (1) nach einem der Ansprüche 1 bis 7, wobei jeder der Einsetzabschnitte und die Innenwand des Kanals, die in diesen Einsetzabschnitt passt, an einer anstoßenden Position verbunden sind, um eine Verbindungsnaht (S) zu bilden; und der Einsetzabschnitt und die Trennwand (12) an der Verbindungsnaht (S) miteinander verschweißt sind, wobei der Biegebereich vorzugsweise konfiguriert ist, um die Verbindungsnaht (S) in einer Dickenrichtung der Endplatte (11) zu schützen.

9. Batteriekastenanordnung (1) nach einem der Ansprüche 1 bis 8, wobei der Verbindungsbereich relativ zum Körper (120) zu einer Seite in einer Dickenrichtung der Trennwand (12) hin verschoben ist und der Biegebereich eine Stufe ist, die zwischen dem Verbindungsbereich und dem Körper (120) angeordnet ist.

10. Batteriekastenanordnung (1) nach einem der Ansprüche 1 bis 9, wobei jeder der Verbindungsbereiche und jeder der Biegebereiche die gleiche Dicke wie der Körper (120) hat.

11. Batteriekastenanordnung (1) nach einem der Ansprüche 1 bis 10, wobei jeder der Verbindungsbereiche und der Körper (120) einstückig ausgebildet sind.

12. Batterie (100), umfassend die Batteriekastenanordnung (1) nach einem der Ansprüche 1 bis 11.

13. Elektrische Vorrichtung, umfassend die Batterie (100) nach Anspruch 12.

14. Herstellungsverfahren einer Batteriekastenanordnung, umfassend:
Bereitstellen (S100) einer Endplatte, wobei die Endplatte mit mindestens zwei Kanälen versehen ist, wobei zwei Vorsprünge der mindestens zwei Kanäle auf der unteren Oberfläche der Endplatte in der Höhenrichtung der Endplatte teilweise überlappen oder voneinander beabstandet sind, oder die zwei Vorsprünge als in einer Kante verbunden angeordnet sind, und eine Verbindungsnut ferner auf der Endplatte ausgebildet ist, und die mindestens zwei Kanäle durch die Verbindungsnut miteinander kommunizieren;
Bereitstellen (S200) einer Trennwand, wobei die Trennwand konfiguriert ist, um mit der Endplatte verbunden zu werden und einen Innenraum der Kastenanordnung zu trennen; wobei die Trennwand einen Körper und mindestens zwei Einsetzabschnitte umfasst, die sich an einem Ende des Körpers befinden, wobei jeder der Einsetzabschnitte einen Verbindungsbereich und einen Biegebereich umfasst, wobei der Verbindungsbereich mit dem Körper durch den Biegebereich verbunden ist; und jeder Kanal der mindestens zwei Kanäle in den mindestens einen Einsetzabschnitt durch Einsetzen passt, so dass der Verbindungsbereich jedes der Einsetzabschnitte gegen eine Innenwand eines passenden Kanals anstößt, was es der Trennwand ermöglicht, mit der Endplatte verbunden zu werden; und
Einsetzen (S300) des Einsetzabschnitts in den Kanal.

## Revendications

1. Ensemble boîte de batterie (1), comprenant :
une plaque d'extrémité (11), la plaque d'extrémité (11) étant pourvue d'au moins deux canaux, deux projections desdits au moins deux canaux sur la surface inférieure de la plaque d'extrémité (11) dans la direction de hauteur de la plaque d'extrémité (11) se chevauchant partiellement ou étant espacées, ou les deux projections étant agencées comme reliées par un bord, et une rainure de liaison (113) étant en outre formée sur la plaque d'extrémité (11), et lesdits au moins deux canaux communiquant les uns avec les autres à travers la rainure de liaison (113) ; et
une cloison (12), la cloison (12) étant conçue pour être reliée à la plaque d'extrémité (11) et séparer un espace interne de l'ensemble boîte (1) ; et la cloison (12) comprenant un corps (120) et au moins deux parties d'insertion situées sur une extrémité du corps (120), chacune des parties d'insertion ayant une extrémité reliée à une partie d'extrémité du corps (120), et chacune des parties d'insertion comprenant une région de liaison et une région coudée, la région de liaison étant reliée au corps (120) par l'intermédiaire de la région coudée ; dans lequel
chaque canal desdits au moins deux canaux s'ajuste avec au moins l'une des parties d'insertion par insertion, de telle sorte que la région de liaison de chacune des parties d'insertion vienne en butée contre une paroi interne d'un canal d'ajustement, permettant que la cloison (12) soit reliée à la plaque d'extrémité (11).

2. Ensemble boîte de batterie (1) selon la revendication 1, dans lequel lesdits au moins deux canaux comprennent un premier canal (111) et un deuxième canal (112), une paroi interne du premier canal (111) comprenant une première surface (1111), la première surface (1111) faisant face à une première direction ; une paroi interne du deuxième canal (112) comprenant une deuxième surface (1121), la deuxième surface (1121) faisant face à une deuxième direction ; et la première direction est opposée à la deuxième direction ; et
lesdites au moins deux parties d'insertion comprennent une première partie d'insertion (121) et une deuxième partie d'insertion (122), la première partie d'insertion (121) étant conçue pour s'ajuster avec le premier canal (111) par insertion, et la première partie d'insertion (121) vient en butée contre la première surface (1111) ; et la deuxième partie d'insertion (122) est conçue pour s'ajuster avec le deuxième canal (112), et la deuxième partie d'insertion (122) vient en butée contre la deuxième surface (1121).

3. Ensemble boîte de batterie (1) selon la revendication 2, dans lequel la première direction et la deuxième direction sont toutes deux parallèles à une direction de largeur de la plaque d'extrémité (11).

4. Ensemble boîte de batterie (1) selon la revendication 2 ou 3, dans lequel le premier canal (111) et le deuxième canal (112) sont agencés le long d'une direction de hauteur de la plaque d'extrémité (11).

5. Ensemble boîte de batterie (1) selon les revendications 2 à 4, dans lequel des projections de la première surface (1111) et la deuxième surface (1121) sur une surface inférieure de la plaque d'extrémité (11) dans la direction de hauteur de la plaque d'extrémité (11) se chevauchent, de préférence la première surface (1111) et la deuxième surface (1121) étant situées sur un plan central dans la direction de largeur de la plaque d'extrémité (11).

6. Ensemble boîte de batterie (1) selon l'une quelconque des revendications 2 à 5, dans lequel la paroi interne du premier canal (111) comprend en outre une troisième surface (1112) opposée à la première surface (1111), et un premier dégagement (1113) est présent entre la première partie d'insertion (121) et la troisième surface (1112) ; et
la paroi interne du deuxième canal (112) comprend en outre une quatrième surface (1122) opposée à la deuxième surface (1121), et un deuxième dégagement (1123) est présent entre la deuxième partie d'insertion (122) et la quatrième surface (1122).

7. Ensemble boîte de batterie (1) selon l'une quelconque des revendications 2 à 6, dans lequel le premier canal (111) est pourvu d'une première pente de guidage (1114) sur une extrémité proche de la cloison (12), et la première pente de guidage (1114) est conçue pour guider la première partie d'insertion (121) lors de son insertion dans le premier canal (111), et le deuxième canal (112) est pourvu d'une deuxième pente de guidage (1124) sur une extrémité proche de la cloison (12), et la deuxième pente de guidage (1124) est conçue pour guider la deuxième partie d'insertion (122) lors de son insertion dans le deuxième canal (112) ; et/ou
dans lequel la première partie d'insertion (121) et la deuxième partie d'insertion (122) sont espacées le long d'une direction de hauteur de la cloison (12).

8. Ensemble boîte de batterie (1) selon l'une quelconque des revendications 1 à 7, dans lequel chacune des parties d'insertion et la paroi interne du canal qui s'ajuste avec cette partie d'insertion sont reliées au niveau d'une position de butée pour former un joint de liaison (S) ; et la partie d'insertion et la cloison (12) sont soudées l'une à l'autre au niveau du joint de liaison (S), la région coudée étant de préférence conçue pour protéger le joint de liaison (S) dans une direction d'épaisseur de la plaque d'extrémité (11).

9. Ensemble boîte de batterie (1) selon l'une quelconque des revendications 1 à 8, dans lequel la région de liaison se décale par rapport au corps (120) vers un côté dans une direction d'épaisseur de la cloison (12), et la région coudée est un gradin disposé entre la région de liaison et le corps (120).

10. Ensemble boîte de batterie (1) selon l'une quelconque des revendications 1 à 9, dans lequel chacune des régions de liaison et chacune des régions coudées ont une épaisseur égale à celle du corps (120).

11. Ensemble boîte de batterie (1) selon l'une quelconque des revendications 1 à 10, dans lequel chacune des régions de liaison et le corps (120) sont formés d'un seul tenant.

12. Batterie (100), comprenant l'ensemble boîte de batterie (1) selon l'une quelconque des revendications 1 à 11.

13. Dispositif électrique, comprenant la batterie (100) selon la revendication 12.

14. Procédé de fabrication d'un ensemble boîte de batterie comprenant les étapes consistant à :
fournir (S100) une plaque d'extrémité, la plaque d'extrémité étant pourvue d'au moins deux canaux, deux projections desdits au moins deux canaux sur la surface inférieure de la plaque d'extrémité dans la direction de hauteur de la plaque d'extrémité se chevauchant partiellement ou étant espacées, ou les deux projections étant agencées comme reliées par un bord, et une rainure de liaison étant en outre formée sur la plaque d'extrémité, et lesdits au moins deux canaux communiquant les uns avec les autres à travers la rainure de liaison ;
fournir (S200) une cloison, la cloison étant conçue pour être reliée à la plaque d'extrémité et séparer un espace interne de l'ensemble boîte ; la cloison comprend un corps et au moins deux parties d'insertion situées sur une extrémité du corps, chacune des parties d'insertion comprenant une région de liaison et une région coudée, la région de liaison étant reliée au corps par l'intermédiaire de la région coudée ; et chaque canal desdits au moins deux canaux s'ajuste avec l'au moins une partie d'insertion par insertion, de telle sorte que la région de liaison de chacune des parties d'insertion vienne en butée contre une paroi interne d'un canal d'ajustement, permettant que la cloison soit reliée à la plaque d'extrémité ; et
insérer (S300) la partie d'insertion dans le canal.
